# EUROPEAN PATENT SPECIFICATION

(11) **EP 4 054 756 B1**
(45) Date of publication and mention of the grant of the patent: **27.11.2024**
(21) Application number: 20816673.6
(22) Date of filing: 02.11.2020
(51) Int. Cl.: B01J 20/18, B01J 20/28, B01J 20/30, C02F 1/28, C02F 101/20

(54) **POROUS ALUMINOSILICATE COMPOSITIONS FOR CONTAMINANT METAL REMOVAL IN WATER TREATMENT**
PORÖSE ALUMINOSILIKAT-ZUSAMMENSETZUNGEN ZUR ENTFERNUNG VON VERUNREINIGENDEN METALLEN BEI DER WASSERBEHANDLUNG
COMPOSITIONS D'ALUMINOSILICATE POREUX POUR L'ÉLIMINATION DE MÉTAUX CONTAMINANTS DANS LE TRAITEMENT DE L'EAU

(30) Priority: 04.11.2019 US 201962930133 P
(43) Date of publication of application: 14.09.2022
(73) Proprietor: BASF Corporation, Florham Park, NJ 07932 (US)
(72) Inventor: DE SILVA, Wathudura Indika Namal, Iselin, New Jersey 08830 (US); YILDIRIM, Ismail, Spur Gordon, Georgia 31031 (US); SIGMAN, Michael B., Attapulgus, Georgia 39815 (US); YILMAZ, Bilge, Iselin, New Jersey 08830 (US)
(74) Representative: Altmann Stößel Dick Patentanwälte PartG mbB
(86) International application number: PCT/US2020/058513
(87) International publication number: WO 2021/091816

(56) References cited:
- US-A- 4 493 902
- US-A1- 2013 121 911
- US-A1- 2014 190 892
- US-A1- 2018 214 848
- CARDOSO SIMÃO P. ET AL: "Competitive Removal of Cd2+ and Hg2+ Ions from Water Using Titanosilicate ETS-4: Kinetic Behaviour and Selectivity", WATER, AIR,, vol. 224, no. 5, 6 April 2013 (2013-04-06), Cham, XP093121949, ISSN: 0049-6979, Retrieved from the Internet <URL:http://link.springer.com/article/10.1007/s11270-013-1535-z/fulltext.html> DOI: 10.1007/s11270-013-1535-z

## Description

### CROSS-REFERENCE TO RELATED APPLICATIONS

This application claims the benefit of priority to U.S. Provisional Application No. 62/930,133, filed November 4, 2019.

### FIELD

The present technology is generally related to materials for metal contaminant removal in water treatment. More specifically, the technology is related to adsorbent materials that include porous alumina silicate compositions, and methods of using such adsorbent materials.

### SUMMARY

In one aspect, the present technology provides an adsorbent material that includes a silicate composition, wherein the silicate composition comprises 5% to 95% by weight of a crystalline phase; wherein the silicate composition comprises an interconnected porous scaffold having a total mercury (Hg) pore volume of 0.005 cc/g to 0.25 cc/g for pores having a diameter of 20-10,000 Å, a total mercury (Hg) pore volume of 0.10 cc/g to 0.25 cc/g for pores having a diameter of 200-10,000 Å, and a total nitrogen (N) pore volume of 0.02 cc/g to 0.10 cc/g for pores having a diameter of 20-600 Å; wherein the silicate composition comprises: 20% to 60% by weight of the crystalline phase comprising Y-zeolite; 5% to 95% by weight of a non-zeolitic matrix phase based on the total weight of the silicate composition; and wherein the silicate composition has a surface composition comprising 5% to 20% sodium calculated as atomic percent and a surface area of 200 m²/g to 500 m²/g; and wherein the composition further comprises additional adsorbent comprising titanosilicate.

Disclosed but not claimed is an adsorbent material blend comprising a silicate composition as described herein in any embodiment and a titanosilicate composition. For example, in any embodiment disclosed herein, the adsorbent material blend may include a silicate composition that includes about 20% to about 60% by weight of the crystalline phase that may include Y-zeolite; about 5% to about 95% by weight of the non-zeolitic matrix phase; and the interconnected porous scaffold having a total mercury pore volume of about 0.10 cc/g to about 0.25 cc/g for pores having a diameter of about 200-10,000 Å and a total nitrogen (N) pore volume of about 0.02 cc/g to about 0.10 cc/g for pores having a diameter of about 20-600 Å; where the silicate composition may have a surface composition that includes about 5% to about 20% sodium calculated as atomic percent and a surface area of about 200 m²/g to about 500 m²/g.

Disclosed but not claimed is an adsorbent material blend including a silicate composition as described herein in any embodiment and a binder, and the adsorbent material blend is a granular adsorbent material blend. In some embodiments, the binder is kaolin clay. For example, in any embodiment disclosed herein, the adsorbent material blend may include a silicate composition that includes about 20% to about 60% by weight of the crystalline phase that may include Y-zeolite; about 5% to about 95% by weight of the non-zeolitic matrix phase; and the interconnected porous scaffold having a total mercury pore volume of about 0.10 cc/g to about 0.25 cc/g for pores having a diameter of about 200-10,000 Å and a total nitrogen (N) pore volume of about 0.02 cc/g to about 0.10 cc/g for pores having a diameter of about 20-600 Å; where the silicate composition may have a surface composition that includes about 5% to about 20% sodium calculated as atomic percent and a surface area of about 200 m²/g to about 500 m²/g.

Also disclosed but not claimed are methods for producing the adsorbent material described herein, the method includes pre-forming precursor microspheres that include a clay material; *in situ* crystallizing a zeolite in or on the pre-formed microspheres to provide a silicate composition as described herein in any embodiment that includes a crystalline phase; and drying the silicate composition to obtain the adsorbent material. In any embodiment herein, the silicate material obtained according to the present method may have an interconnected porous scaffold having a total mercury (Hg) pore volume from about 0.005 cc/g to about 0.25 cc/g for pores having a diameter of about 20-10,000 Å and a total nitrogen (N) pore volume from about 0.02 cc/g to about 0.1 cc/g for pores having a diameter of about 20-600 Å.

In yet another aspect, the present technology provides a method for treating a liquid comprising metal contaminants that includes contacting the liquid with an adsorbent material as described herein in any embodiment to obtain a treated liquid, wherein the contacting removes the metal contaminants from the liquid. In any embodiment disclosed herein, the liquid may be water. In any embodiment, the metal contaminant may be lead. In any embodiment, the metal contaminant may be cadmium.

In a further aspect, the present technology provides a method for treating water that includes contacting the water with an adsorbent material as described herein in any embodiment, wherein the contacting removes metal contaminants from the water.

In another aspect, the present technology provides a method for removing metal contaminants as described herein in any embodiment from water that includes contacting the water with an adsorbent material as described herein, wherein the contacting removes metal contaminants from the water.

### BRIEF DESCRIPTION OF THE DRAWINGS

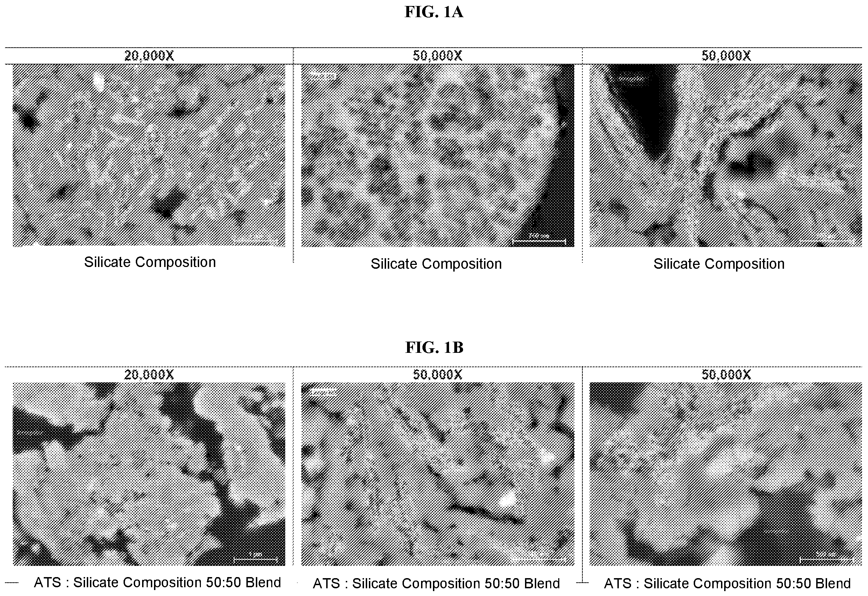

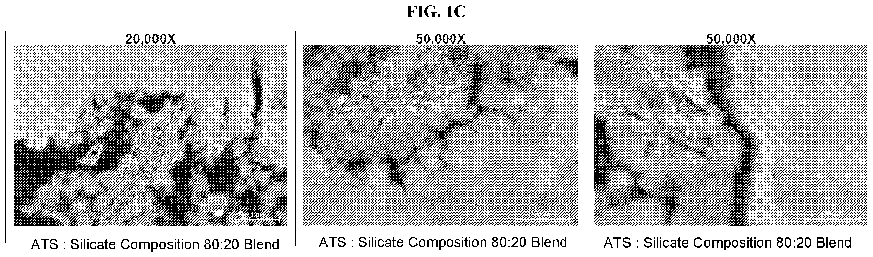

FIGs. 1A-1C illustrate scanning electron microscope images of cut/mount/polish (CMP) sections of adsorbent materials according to the present technology. FIG. 1A provides a CMP section view of the adsorbent material according to Example 1A containing silicate composition (-170 mesh). FIG. 1B provides a CMP section view of the adsorbent material according to Example 2 containing a 50:50 weight ratio blend of titanosilicate (ATS) to silicate composition (-170 mesh). FIG. 1C provides a CMP section view of the adsorbent material according to Example 2 containing a 80:20 weight ratio blend of ATS to silicate composition (-170 mesh).

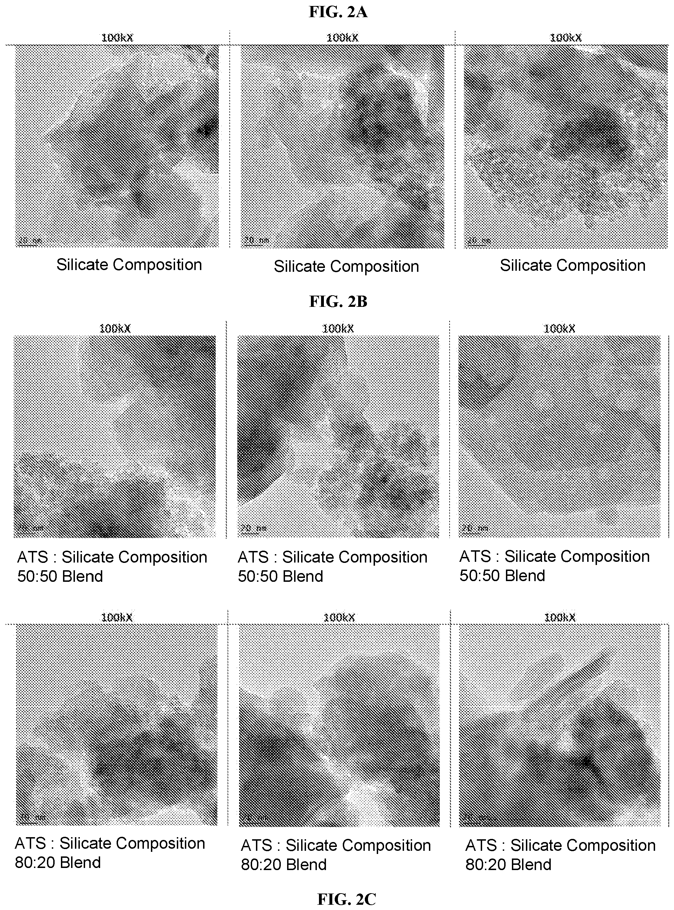

FIGs. 2A-2C illustrate transmission electron microscope (TEM) images of adsorbent material pores according to the present technology, showing the Y-zeolite phase and amorphous matrix phase within the interconnected pore scaffold. FIG. 2A provides a TEM image of the adsorbent material pores according to Example 1A containing silicate composition (-170 mesh). FIG. 2B provides a TEM image of the adsorbent material pores according to Example 2 containing a 50:50 weight ratio blend of ATS to silicate composition (-170 mesh). FIG. 2C provides a TEM image of the adsorbent material according to Example 2 containing an 80:20 weight ratio blend of ATS to silicate composition (-170 mesh).

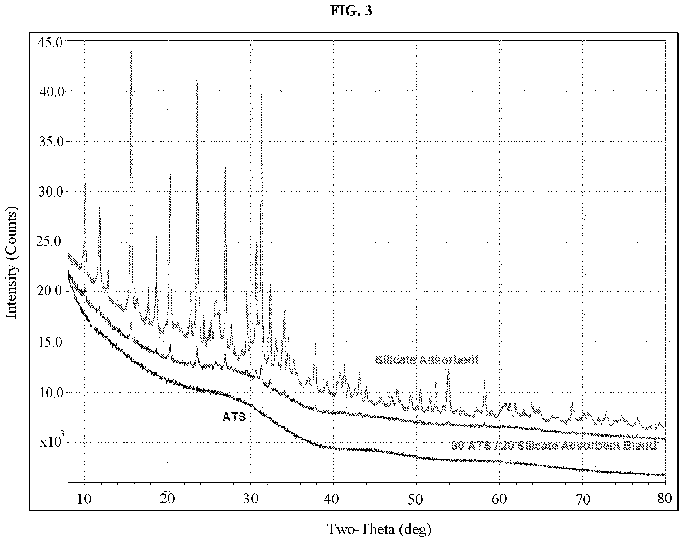

FIG. 3 illustrates X-ray Powder Diffraction (XRD) scans of the silicate composition (Example 1A), 80:20 ATS/silicate composition blend (Example 2A), and ATS.

### DETAILED DESCRIPTION

Various embodiments are described hereinafter. It should be noted that the specific embodiments are not intended as an exhaustive description or as a limitation to the broader aspects discussed herein. One aspect described in conjunction with a particular embodiment is not necessarily limited to that embodiment and can be practiced with any other embodiment(s).

As used herein, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% of the particular term.

The use of the terms "a" and "an" and "the" and similar referents in the context of describing the elements (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the embodiments and does not pose a limitation on the scope of the claims unless otherwise stated. No language in the specification should be construed as indicating any non-claimed element as essential.

As used herein, the term "zeolite" refers to a crystalline aluminosilicate with a framework based on an extensive three-dimensional network of oxygen ions and have a substantially uniform pore distribution.

As used herein, the term *"in situ* crystallized" refers to the process in which a crystalline phase, such as zeolite, is grown directly on/in a microsphere and is intimately associated with the matrix or non-zeolitic material, for example, as described in United States Patent Nos. 4,492,902 and 6,656,347 and International Patent Application No. PCT/US2018/032909. For example, in any embodiment disclosed herein, a crystalline phase that includes zeolite may be grown within the pores of the microsphere, such that the zeolite is uniformly dispersed on the matrix or non-zeolitic material. The zeolite may be grown directly on/in the pores of the precursor microsphere such that the zeolite is intimately associated and uniformly dispersed on the matrix or non-zeolitic material.

As used herein, the term "preformed microspheres" or "precursor microspheres" refer to microspheres obtained by spray drying and calcining a clay material.

The present technology provides novel adsorbent materials containing a porous aluminosilicate composition having a high surface area, and highly accessible pore architecture. This highly accessible pore architecture of the aluminosilicate composition refers to a unique, three-dimensional, homogeneous interconnected pore network (i.e., "interconnected porous scaffold") characterized in that the porous scaffold has a high porosity (or total pore volume) for average pore diameters ranging from 20-10,000 cubic centimeters (cc)/g.

It has been found that the interconnected porous scaffold is advantageous for the removal of metal contaminants (*e.g.,* lead) from water via cation exchange and adsorption. Specifically, the novel adsorbent materials show more than 15% (*e*.*g*., more than 50%) lead exchange capacity increase compared to known adsorbent materials, such as titanosilicates. Moreover, the clay-derived silicate compositions included in the adsorbent materials of the present technology do not contain chlorides, sulfates, etc., which differs from conventional industrial materials (*e*.*g*., titanosilicates) and present concerns for household and/or drinking water treatment.

### Adsorbent Material

According to the invention, the adsorbent material includes a silicate composition, wherein the silicate composition comprises 5% to 95% by weight of a crystalline phase; wherein the silicate composition comprises an interconnected porous scaffold having a total mercury (Hg) pore volume of 0.005 cc/g to 0.25 cc/g for pores having a diameter of 20-10,000 Å, a total mercury (Hg) pore volume of 0.10 cc/g to 0.25 cc/g for pores having a diameter of 200-10,000 Å, and a total nitrogen (N) pore volume of 0.02 cc/g to 0.10 cc/g for pores having a diameter of 20-600 Å; wherein the silicate composition comprises: 20% to 60% by weight of the crystalline phase comprising Y-zeolite; 5% to 95% by weight of a non-zeolitic matrix phase based on the total weight of the silicate composition; and wherein the silicate composition has a surface composition comprising 5% to 20% sodium calculated as atomic percent and a surface area of 200 m²/g to 500 m²/g; and wherein the composition further comprises additional adsorbent comprising titanosilicate .

The silicate composition includes a crystalline phase. In any embodiment disclosed herein, the crystalline phase includes a zeolite. Suitable zeolite of the crystalline phase may include, but is not limited to, zeolite X, Y-zeolite, ZSM-5, beta zeolite, ZXM-11, ZSM-14, ZSM-17, ZWM-18, ZSM-20, ZSM-31, ZSM-34, ZSM-41, ZSM-46, mordenite, chabazite, or mixtures of two or more thereof. In any embodiment disclosed herein, the crystalline phase comprises a Y-zeolite crystalline phase. In any embodiment disclosed herein, the zeolite may be grown throughout *(i.e.,* within the interconnected porous scaffold and on the surface) the silicate composition.

The crystalline zeolite phase may be a zeolite crystallization process residue of a clay material as described herein in any embodiment. For example, in any embodiment described herein, the clay material may be a calcined clay. Suitable clay materials in any embodiment described herein may include, but are not limited to, metakaolin, kaolin clay, or a mixture of any two or more thereof. In any embodiment described herein, the clay material may include about 30% to about 60% by weight of metakaolin based on the total weight of the clay material. Suitable amounts of metakaolin by weight may include, but are not limited to, about 30%, about 35%, about 40%, about 45%, about 50%, about 55%, about 60%, or any range including and/or in between any two of the preceding values. In any embodiment herein, the clay material may include about 40% to about 70% by weight of kaolin clay based on the total weight of the clay material. Suitable amount of kaolin clay based on the total weight of the clay material may include, but is not limited to, about 40%, about 45%, about 50%, about 55%, about 60%, about 65%, about 70%, or any range including and/or in between any two of the preceding values. In any embodiment herein, the clay material may have been calcined substantially through its characteristic exotherm. In any embodiment disclosed herein, crystalline zeolite phase may be a crystalline Y-zeolite phase.

In any embodiment herein, the silicate composition includes from about 5% to about 95% by weight of the crystalline phase based on the total weight of the silicate composition. Suitable amounts of the crystalline phase present in the silicate composition may include, but are not limited to about 5%, about 10%, about 15%, about 20%, about 25%, about 30%, about 35%, about 40%, about 45%, about 50%, about 55%, about 60%, about 65%, about 70%, about 75%, about 80%, about 85%, about 90%, about 95% by weight (based on the total weight of the silicate composition) or any range including and/or in between any two of these values. In any embodiment disclosed herein, the silicate composition may include the crystalline phase in an amount of about 20% to about 60% by weight based on the total weight of the silicate composition. For example, in any embodiment disclosed herein, the crystalline phase may be present in an amount of about 20%, about 22%, about 24%, about 26%, about 28%, about 30%, about 32%, about 34%, about 36%, about 38%, about 40%, about 42%, about 44%, about 46%, about 48%, about 50%, about 52%, about 54%, about 56%, about 58%, about 60% by weight (based on the total weight of the silicate composition) or any range including and/or in between any two of these values.

In any embodiment herein, the silicate composition further includes a non-zeolitic matrix phase. In any embodiment disclosed herein, the non-zeolitic matrix phase may be amorphous, crystalline, or a combination thereof. In any embodiment disclosed herein, the non-zeolitic matrix phase may be amorphous. For example, in any embodiment disclosed herein, the amorphous non-zeolitic matrix phase may include, but is not limited to, amorphous aluminosilicate, mullite, spinel, or combinations thereof. In any embodiment disclosed herein, the silicate composition includes from about 5% to about 95% by weight of the non-zeolitic matrix phase based on the total weight of the silicate composition. Suitable amounts of the non-zeolitic matrix phase present in the silicate composition may include, but are not limited to about 5%, about 10%, about 15%, about 20%, about 25%, about 30%, about 35%, about 40%, about 45%, about 50%, about 55%, about 60%, about 65%, about 70%, about 75%, about 80%, about 85%, about 90%, about 95% by weight (based on the total weight of the silicate composition) or any range including and/or in between any two of these values.

The silicate composition has an interconnected porous scaffold that includes pores that may be microporous, mesoporous, macroporous, or a mixture thereof. In any embodiment described herein, the interconnected porous scaffold of the silicate composition has a mercury pore volume from about 0.01 cc/g to about 0.25 cc/g for pores having a diameter of about 200-10,000 Å. Suitable mercury pore volumes as described herein in any embodiment may include from about 0.01 cc/g, about 0.02 cc/g, about 0.03 cc/g, about 0.04 cc/g, about 0.05 cc/g, about 0.06 cc/g, about 0.07 cc/g, about 0.08 cc/g, about 0.09 cc/g, about 0.10 cc/g, about 0.11 cc/g, about 0.12 cc/g, about 0.13 cc/g, about 0.14 cc/g, about 0.15 cc/g, about 0.16 cc/g, about 0.17 cc/g, about 0.18 cc/g, about 0.19 cc/g, about 0.20 cc/g, about 0.21 cc/g, about 0.22 cc/g, about 0.23 cc/g, about 0.24 cc/g, about 0.25 cc/g, or any range including and/or in between any two of the preceding values. In any embodiment herein, the mercury pore volume may be from about 0.10 cc/g to about 0.25 cc/g for pores having a diameter of about 200-10,000 Å.

In any embodiment described herein, the interconnected porous scaffold of the silicate composition includes a nitrogen pore volume from about 0.02 cc/g to about 0.10 cc/g for pores having a diameter of about 20-600 Å. For example, in any embodiment described herein, the interconnected porous scaffold of the silicate composition may have a nitrogen pore volume from about 0.02 cc/g, about 0.03 cc/g, about 0.04 cc/g, about 0.05 cc/g, about 0.06 cc/g, about 0.07 cc/g, about 0.08 cc/g, about 0.09 cc/g, about 0.10 cc/g, or ranges including and/or in between any two of the preceding values.

The silicate composition of the adsorbent material also has a high surface area; for example, in any embodiment described herein, the silicate composition has a surface area from about 200 m²/g to about 500 m²/g. Suitable surface area values for the silicate composition may include, but are not limited to, about 200 m²/g, about 210 m²/g, about 220 m²/g, about 230 m²/g, about 240 m²/g, about 250 m²/g, about 260 m²/g, about 270 m²/g, about 280 m²/g, about 290 m²/g, about 300 m²/g, about 310 m²/g, about 320 m²/g, about 330 m²/g, about 340 m²/g, about 350 m²/g, about 360 m²/g, about 370 m²/g, about 380 m²/g, about 390 m²/g, about 400 m²/g, about 410 m²/g, about 420 m²/g, about 430 m²/g, about 440 m²/g, about 450 m²/g, about 460 m²/g, about 470 m²/g, about 480 m²/g, about 490 m²/g, about 500 m²/g, or any range including and/or in between any two of the preceding values. In any embodiment described herein, the surface area may be from about 200 m²/g to about 500 m²/g, about 200 m²/g to about 350 m²/g, about 225 m²/g to about 300 m²/g, about 255 m²/g to about 275 m²/g, or any range including and/or in between any two of the preceding values.

The silicate composition of the adsorbent material further includes a surface composition of at least about 5% to about 20% sodium calculated as atomic percent. For example, in any embodiment described herein, the surface composition of the silicate composition may include sodium calculated as atomic percent of about 5%, about 6%, about 7%, about 8%, about 9%, about 10%, about 11%, about 12%, about 13%, about 14%, about 15%, about 16%, about 17%, about 18%, about 19%, about 20%, or any range including and/or in between any two of the preceding values. In any embodiment herein, the surface composition may be from about 7% to about 12% sodium calculated as atomic percent. In any embodiment herein, the surface composition comprises about 9% to about 11% sodium calculated as atomic percent.

The surface of the silicate composition of the adsorbent material is highly negatively charged, as can be confirmed by cation exchange capacity or other surface charge analysis methods such as zeta potential measurements. Without being bound by theory, it is believed that the excess negative charge on the surface of the silicate composition results from the replacement of silicon by aluminum in the structure, which acts as a cation adsorbent/exchanger for metal contaminants (*e.g.,* Pb, Zn, Cr, Cd, Cu, Mn, Fe, and the like) in liquids such as water. The inventors discovered the present adsorbent material that includes the silicate composition may exhibit a lead (Pb) exchange capacity increase of greater than 15% compared to conventional water filtrate materials based on titanosilicates. In any embodiment herein, the silicate composition of the adsorbent material may exhibit an increase in lead exchange capacity of about 15% to about 150%. For example, in any embodiment disclosed herein, the lead exchange capacity may be about 15%, about 20%, about 25%, about 30%, about 35%, about 40%, about 45%, about 50%, about 55%, about 60%, about 65%, about 70%, about 75%, about 80%, about 85%, about 90%, about 95%, about 100%, about 105%, about 110%, about 115%, about 120%, about 125%, about 130%, about 135%, about 140%, about 145%, about 150%, or any range including and/or in between any two of these values.

In any embodiment described herein, the silicate composition may have a particle size from about 10 microns to about 150 microns. In any embodiment disclosed herein, the particle size may be from about 40 microns to about 150 microns. For example, in any embodiment disclosed herein, the particle size may be about 10 microns, about 20 microns, about 30 microns, about 40 microns, about 50 microns, about 60 microns, about 70 microns, about 80 microns, about 90 microns, about 100 microns, about 110 microns, about 120 microns, about 130 microns, about 140 microns, about 150 microns, or any range including and/or in between any two of these values.

In any embodiment described herein, the silicate composition may have an average particle size distribution from about 10 microns to about 60 microns. For example, in any embodiment described herein, the average particle size distribution may be about 10 microns, about 15 microns, about 20 microns, about 25 microns, about 30 microns, about 35 microns, about 40 microns, about 45 microns, about 50 microns, about 55 microns, about 60 microns, or any range including and/or in between any two of the preceding values. In any embodiment herein, the average particle size distribution is from about 45 microns to about 55 microns. In any embodiment, the average particle size distribution may be about 50 microns less, about 45 microns or less, about 40 microns or less, about 35 microns or less, about 30 microns or less, about 25 microns or less, about 20 microns or less, about 15 microns or less, about 10 microns or less, or any range including and/or in between any two of the preceding values. Average particle size distribution may be measured via a particle size analyzer, such as by Microtrac S3500 Particle Size Analyzer. For example, in any embodiment disclosed herein, the silicate composition may have an average particle size distribution from about 10 microns to about 60 microns as measured by Microtrac S3500 Particle Size Analyzer.

In any embodiment described herein, the silicate composition includes about 20% to about 60% by weight of the crystalline phase that includes Y-zeolite; about 5% to about 95% by weight of the non-zeolitic matrix phase; and the interconnected porous scaffold has a total mercury pore volume of about 0.10 cc/g to about 0.25 cc/g for pores having a diameter of about 200-10,000 Å and a total nitrogen (N) pore volume of about 0.02 cc/g to about 0.10 cc/g for pores having a diameter of about 20-600 Å; wherein the silicate composition has a surface composition that includes about 5% to about 20% sodium calculated as atomic percent and a surface area of about 200 m²/g to about 500 m²/g.

The adsorbent material of the present technology further includes additional adsorbents for adsorbing metal contaminants. For example, in any embodiment disclosed herein, the additional adsorbents may include titanosilicates, non-zeolitic molecular sieves, activated carbon, porous glass, clays, metalloaluminates, metallophosphates, layered silicates, or combinations of two or more thereof. According to the invention, the additional adsorbent is a titanosilicate.

In any embodiment herein, the adsorbent material may have a weight ratio of the silicate composition to the additional adsorbent from about 99:1 to about 1:99. For example, in any embodiment herein, the weight ratio of the silicate composition to the additional adsorbent may be about 99:1, about 95:5, about 90:10, about 85:15, about 80:20, about 75:25, about 70:30, about 65:35, about 60:40, about 55:45, about 50:50, about 45:55, about 40:60, about 35:65, about 30:70, about 25:75, about 20:80, about 15:85, about 10:90, about 5:95, about 1:99, or any range including and/or in between any two of the preceding values. In any embodiment herein, the weight ratio may be from about 80:20 to about 20:80, about 80:20 to about 50:50, about 50:50 to about 20:80, or any range including and/or in between any two of the preceding values.

Disclosed but not claimed is an adsorbent material blend comprising a silicate composition as described herein in any embodiment and a titanosilicate composition. For example, in any embodiment disclosed herein, the adsorbent material blend may include a silicate composition that includes about 20% to about 60% by weight of the crystalline phase that may include Y-zeolite; about 5% to about 95% by weight of the non-zeolitic matrix phase; and the interconnected porous scaffold having a total mercury pore volume of about 0.10 cc/g to about 0.25 cc/g for pores having a diameter of about 200-10,000 Å and a total nitrogen (N) pore volume of about 0.02 cc/g to about 0.10 cc/g for pores having a diameter of about 20-600 Å; where the silicate composition may have a surface composition that includes about 5% to about 20% sodium calculated as atomic percent and a surface area of about 200 m²/g to about 500 m²/g.

In any embodiment herein, the adsorbent material blend may have a weight ratio of the silicate composition to the titanosilicate from about 99:1 to about 1:99. For example, in any embodiment herein, the weight ratio of the silicate composition to the titanosilicate may be about 99:1, about 95:5, about 90:10, about 85:15, about 80:20, about 75:25, about 70:30, about 65:35, about 60:40, about 55:45, about 50:50, about 45:55, about 40:60, about 35:65, about 30:70, about 25:75, about 20:80, about 15:85, about 10:90, about 5:95, about 1:99, or any range including and/or in between any two of the preceding values. In any embodiment herein, the weight ratio may be from about 80:20 to about 20:80, about 80:20 to about 50:50, about 50:50 to about 20:80, or any range including and/or in between any two of the preceding values.

In some embodiments, the adsorbent material blend of the present technology may further include additional adsorbents. Suitable additional adsorbents may include non-zeolitic molecular sieves, activated carbon, porous glass, clays, metalloaluminates, metallophosphates, layered silicates, or combinations of two or more thereof.

In any embodiment disclosed herein, the adsorbent material blend that includes the silicate composition may exhibit a lead (Pb) exchange capacity increase of greater than 15% compared to conventional water filtrate materials based on titanosilicates. In any embodiment disclosed herein, the silicate composition of the adsorbent material blend may exhibit an increase in lead exchange capacity of about 15% to about 150%. For example, in any embodiment disclosed herein, the lead exchange capacity may be about 15%, about 20%, about 25%, about 30%, about 35%, about 40%, about 45%, about 50%, about 55%, about 60%, about 65%, about 70%, about 75%, about 80%, about 85%, about 90%, about 95%, about 100%, about 105%, about 110%, about 115%, about 120%, about 125%, about 130%, about 135%, about 140%, about 145%, about 150%, or any range including and/or in between any two of these values.

The adsorbent material of the present technology may further include additional binders. Binders are utilized to bind the individual zeolite matrix together, to form shaped products and to reduce the pressure drop during adsorption. Binders maintain the crush strength of zeolite adsorbents for use, where providing more binder in the forming process generally results in better crush strength for the finished product. In the present technology, binders are used to form granular structure in zeolites. Illustrative binders include alumina, silicate, and clay minerals. Examples of clay minerals include kaolin clay, polygorskite type minerals (i.e., attapulgite), and smectite-type clay minerals (e.g., montmorillonite or bentonite). For example, in any embodiment disclosed herein, the binders may include any clay minerals, such as kaolin clay, polygorskite type minerals (i.e., attapulgite), and smectite-type clay minerals (e.g., montmorillonite or bentonite), or combinations of two or more thereof.

In any embodiment described herein, the binder may be kaolin clay. Kaolin clay particles are naturally formed in the shape of stacked hexagonal platelets, where the existence of these stacked platelets has been confirmed by using scanning electron microscopy (SEM). These platelets can be separated and formed into individual platelets by proper delamination and dispersion methods. At proper dispersion with high solids loading, kaolin clay are used as binders for zeolite particles for enhanced adsorption capability as described herein. Typical high solids kaolin clay slurries are prepared at about 60-70% solids loading.

In any embodiment herein, the binder may have a weight ratio of the silicate composition to the binder from about 90:10 to about 50:50, including from about 80:20 to about 60:40. For example, in any embodiment herein, the weight ratio of the silicate composition to the binder may be about 90:10, about 85:15, about 80:20, about 75:25, about 70:30, about 65:35, about 60:40, about 55:45, about 50:50, or any range including and/or in between any two of the preceding values. In any embodiment herein, the weight ratio may be from about 80:20 to about 60:40, or any range including and/or in between any two of the preceding values. In any embodiment herein, the weight ratio may be about 70:30.

Also disclosed but not claimed is a granular adsorbent material blend comprising a silicate composition as described herein in any embodiment and a binder, such as kaolin clay. For example, in any embodiment disclosed herein, the granular adsorbent material blend may include a silicate composition that includes about 20% to about 60% by weight of the crystalline phase that may include Y-zeolite; about 5% to about 95% by weight of the non-zeolitic matrix phase; and the interconnected porous scaffold having a total mercury pore volume of about 0.10 cc/g to about 0.25 cc/g for pores having a diameter of about 200-10,000 Å and a total nitrogen (N) pore volume of about 0.02 cc/g to about 0.10 cc/g for pores having a diameter of about 20-600 Å; where the silicate composition may have a surface composition that includes about 5% to about 20% sodium calculated as atomic percent and a surface area of about 200 m²/g to about 500 m²/g.

In any embodiment herein, the granular adsorbent material blend may have a weight ratio of the silicate composition to the binder, such as kaolin clay, from about 90:10 to about 50:50, including from about 80:20 to about 60:40. For example, in any embodiment herein, the weight ratio of the silicate composition to the binder may be about 90:10, about 85:15, about 80:20, about 75:25, about 70:30, about 65:35, about 60:40, about 55:45, about 50:50, or any range including and/or in between any two of the preceding values. In any embodiment herein, the weight ratio may be from about 80:20 to about 60:40, or any range including and/or in between any two of the preceding values. In any embodiment herein, the weight ratio may be about 70:30.

In some embodiments, the granular adsorbent material blend of the present technology may further include pore forming agents. The pore forming agents may be added to the zeolite/binder mixture, such as the zeolite/kaolin clay mixture, during the granulation step to enhance the total pore volume of the end product. Suitable pore forming agents include but are not limited to organic polymers, including corn starch, starch derivatives, lignosulfonates, polyacrylamide, polyacrylic acid, poly vinyl alcohol, cellulose, cellulose derivatives and the like. The amount of the pore forming agent that may be added is from about 0.5% to about 5% by weight, or any range including and/or in between any two of the preceding values, such as about 0.5%, about 1%, about 1.5%, about 2%, about 2.5%, about 3%, about 3.5%, about 4%, about 4.5%, and 5%.

In some embodiments, the granular adsorbent material blend of the present technology may further include additional adsorbents. Suitable additional adsorbents may include non-zeolitic molecular sieves, activated carbon, porous glass, clays, metalloaluminates, metallophosphates, layered silicates, or combinations of two or more thereof.

In any embodiment disclosed herein, the adsorbent material blend that includes the silicate composition may exhibit a cadmium (Cd) exchange capacity increase of greater than 100% compared to conventional water filtrate materials based on titanosilicates. The adsorbent material may be in granulated or spray dried beads form. In any embodiment disclosed herein, the silicate composition of the adsorbent material blend may exhibit an increase in cadmium exchange capacity of about 500% to about 500%. For example, in any embodiment disclosed herein, the cadmium exchange capacity may be about 50%, about 75%, about 100%, about 105%, about 110%, about 115%, about 120%, about 125%, about 130%, about 135%, about 140%, about 145%, about 150%, about 155%, about 160%, about 165%, about 170%, about 180%, about 190%, about 200%, about 250%, about 300%, about 350%, about 400%, about 450%, about 500%, or any range including and/or in between any two of these values.

### Method of Producing the Adsorbent Material

Disclosed but not claimed are methods for producing the adsorbent material described herein, the method including pre-forming precursor microspheres that include a clay material; *in situ* crystallizing a zeolite in or on the pre-formed microspheres to provide a silicate composition as described herein in any embodiment that includes about 5% to about 95% of a crystalline phase; and drying the silicate composition to obtain the adsorbent material. In any embodiment herein, the silicate material obtained according to the present method may have an interconnected porous scaffold having a total mercury (Hg) pore volume from about 0.005 cc/g to about 0.25 cc/g for pores having a diameter of about 20-10,000 Å and a total nitrogen (N) pore volume from about 0.02 cc/g to about 0.1 cc/g for pores having a diameter of about 20-600 Å.

In any embodiment herein, the *in situ* crystallizing includes: mixing the precursor microspheres with sodium silicate, sodium hydroxide, a zeolite initiator, and water to obtain an alkaline slurry; and heating the alkaline slurry to a temperature, and for a time, sufficient to crystallize at least about 15 wt% NaY-zeolite in the silicate composition. For example, in any embodiment described herein, the alkaline slurry may be heated for a time sufficient to crystallize from about 20 wt% to about 60 wt% NaY-zeolite in the silicate composition.

In any embodiment herein, the clay material is a clay material as described herein in any embodiment; for example, the clay material may include kaolin clay, metakaolin, or a mixture of any two or more thereof. In any embodiment herein, the clay material is a calcined clay material. For example, the clay material may include about 30% to about 60% by weight of metakaolin based on the total weight of the clay material as described herein in any embodiment. In any embodiment as described herein, the clay material may include about 40% to about 70% by weight of kaolin clay based on the total weight of the clay material. In any embodiment herein, the clay material may have been calcined substantially through its characteristic exotherm.

In any embodiment herein, the precursor microspheres may further include χ-alumina, δ-alumina, θ-alumina, κ-alumina, boehmite, or mixtures of two or more thereof. For example, in any embodiment herein, the precursor microspheres may include a mixture of gamma-alumina, χ-alumina, and one or more of δ-alumina, θ-alumina, κ-alumina, and boehmite.

The silicate composition, as described herein in any embodiment, includes from about 5% to about 95% by weight of the amorphous matrix phase based on the total weight of the silicate composition. The silicate composition, as described herein in any embodiment, includes from about 20% to about 60% by weight of the crystalline Y-zeolite phase. In any embodiment as described herein, the interconnected porous scaffold includes pores that are microporous, mesoporous, macroporous, or a mixture thereof. In any embodiment as described herein, the interconnected porous scaffold has a mercury pore volume from about 0.01 cc/g to about 0.25 cc/g for pores having a diameter of about 200-10,000 Å. In any embodiment as described herein, the silicate composition has a surface area from about 200 m²/g to about 500 m²/g. As described herein in any embodiment, the silicate composition has a surface composition that includes from about 5% to about 20% sodium calculated as atomic percent.

Alternatively, the silicate composition may be produced by the *in situ* procedure described in U.S. Patent No. 4,493,902 or 6,656,347.

Following *in situ* crystallization and prior to drying, the silicate composition may be reduced to an average particle size distribution (D50) of about 50 microns or less and isolated or separated from the crystallization liquor after contacting. In any embodiment herein, prior to drying, the method may further include reducing a particle size of the silicate composition to a D50 of about 50 microns or less. For example, the method may include reducing the average particle size to about 50 microns less, about 45 microns or less, about 40 microns or less, about 35 microns or less, about 30 microns or less, about 25 microns or less, about 20 microns or less, about 15 microns or less, about 10 microns or less, or any range including and/or in between any two of the preceding values.

In any embodiment herein, the method may further include separating the silicate composition from at least a major portion of alkaline slurry. The separating may be carried out by commonly used methods such as filtration. In any embodiment herein, the silicate material may be washed or contacted with water or other suitable liquid to remove residual crystallization liquor.

In any embodiment herein, the method may further include forming the silicate composition into a porous silicate cake. In any embodiment herein, prior to drying, the method may further include pulverizing the porous silicate cake to obtain particles, filtering the particles; and forming a silicate cake slurry from the previously obtained particles. In any embodiment herein, the filtering may include filtering the particles with an about 40 mesh screen to about 170 mesh screen to obtain filtered particles. For example, the filtering may include filtering the particles using a screen having an opening of about 40 mesh, about 45 mesh, about 50 mesh, about 55 mesh, about 60 mesh, about 65 mesh, about 70 mesh, about 75 mesh, about 80 mesh, about 85 mesh, about 90 mesh, about 95 mesh, about 100 mesh, about 105 mesh, about 110 mesh, about 115 mesh, about 120 mesh, about 125 mesh, about 130 mesh, about 135 mesh, about 140 mesh, about 145 mesh, about 150 mesh, about 155 mesh, about 160 mesh, about 165 mesh, about 170 mesh, or any range including and/or in between any two of these values. In some embodiments, the filtered particles may have an average particle size greater than about 40 to about 170 mesh (e.g., +40 mesh to +170 mesh). In some embodiments, the filtered particles may have an average particle size less than about 40 mesh to about 170 mesh (*e.g.,* -40 mesh to -170 mesh). In any embodiment herein, forming the silicate cake slurry may include mixing the filtered particles with water to obtain the silicate cake slurry. In any embodiment described herein, prior to drying, the method may include, pulverizing the porous silicate cake to obtain particles, filtering the particles with a 170 mesh screen; and mixing the filtered particles with water to obtain a silicate cake slurry having about 10% solids or less.

In any embodiment herein, the method may further include mixing the silicate cake slurry with an additional adsorbent slurry as described herein in any embodiment to obtain a blend. For example, in any embodiment disclosed herein, the additional adsorbent slurry may be a titanosilicate slurry, wherein the titanosilicate slurry may include from about 5% to about 15% solids by weight of titanosilicate. For example, in any embodiment herein, the titanosilicate slurry may include about 5%, about 6%, about 7%, about 8%, about 9%, about 10%, about 11%, about 12%, about 13%, about 14%, about 15% solids by weight of titanosilicate.

In any embodiment herein, the blend may include a weight ratio of the silicate composition to additional adsorbent (*e.g.,* titanosilicate) from about 99:1 to about 1:99 calculated on a dry basis. For example, in any embodiment herein, the weight ratio (calculated on a dry basis) of the silicate composition to the additional adsorbent may be about 99:1, about 95:5, about 90:10, about 85:15, about 80:20, about 75:25, about 70:30, about 65:35, about 60:40, about 55:45, about 50:50, about 45:55, about 40:60, about 35:65, about 30:70, about 25:75, about 20:80, about 15:85, about 10:90, about 5:95, about 1:99, or any range including and/or in between any two of the preceding values. In any embodiment herein, the weight ratio (calculated on a dry basis) may be from about 80:20 to about 20:80, about 80:20 to about 50:50, about 50:50 to about 20:80, or any range including and/or in between any two of the preceding values.

In any embodiment herein, the method may further include adding a binder to the silicate composition to prepare a granular adsorbent blend. For instance, the granular adsorbent blend is prepared by drying (e.g., spray drying) the silicate based adsorbent material. In some embodiments, kaolin clay is added to the silicate composition prior to drying and the silicate composition and kaolin clay are dried together to better control the desired silicate adsorbent / kaolin clay ratio on the final granulated product form. When kaolin clay is used as a binder, the binder comprises highly dispersed kaolin particles in high solids slurry form (e.g. at least 60% solids or higher). The dried silicate composition is granulated with a binder, such as a kaolin clay slurry, using granulation methods are known by those skilled in the art to provide the granular adsorbent blend. The granular adsorbent product may be then furthered screened to obtain an adsorbent with the desired particle size range and then calcined to provide the final granular adsorbent blend product.

The binder (e.g., kaolin clay) may have a weight ratio of the silicate composition to the binder from about 90:10 to about 50:50, including from about 80:20 to about 60:40. For example, in any embodiment herein, the weight ratio of the silicate composition to the binder may be about 90:10, about 85:15, about 80:20, about 75:25, about 70:30, about 65:35, about 60:40, about 55:45, about 50:50, or any range including and/or in between any two of the preceding values. In any embodiment herein, the weight ratio may be from about 80:20 to about 60:40, or any range including and/or in between any two of the preceding values. In any embodiment herein, the weight ratio may be about 70:30. Sufficient water is retained in or added to the mixture to make a formable mixture, that can be easily granulated or formed in a noodle structure in an extruder. The moisture content of the granular adsorbent is in the range of from about 15% to about 20% by weight, or any range including and/or in between any two of these values.

In any embodiment herein, a pore forming agent may be added to the silicate composition/binder mixture during the granulation step to enhance the total pore volume of the end product. Among the acceptable pore forming agents are organic polymers, including corn starch, starch derivatives, lignosulfonates, polyacrylamide, polyacrylic acid, poly vinyl alcohol, cellulose, cellulose derivatives and the like. The amount of the pore forming agent that may be added is from about 0.5 to about 5 percent, by weight.

In any embodiment herein, after drying, the method may further include granulating the silicate composition with a binder, such as kaolin clay, using a granulation method as known to those skilled in the art. For example, a well dispersed kaolin slurry is added to the dried silicate composition, until a granulated structure is formed by using a conventional granulation equipment, which include but are not limited to a paddle mixer, a pan granulator, a drum granulator, a compactor, and an extruder. After mixing in the binder, blended mixture is formed into the appropriate shaped product, which may be formed in any conventional shape, such as beads, pellets, noodles, and tablets.

In any embodiment herein, the screening is used to obtain the granular adsorbent blend with the desired particle size, which may range from about 10 mesh to about 80 mesh, or any range including and/or in between any two of these values. In some embodiment, the granular adsorbent blend may have a particle size of about 10 mesh, about 15 mesh, about 20 mesh, about 25 mesh, about 30 mesh, about 35 mesh, about 40 mesh, about 45 mesh, about 50 mesh, about 55 mesh, about 60 mesh, about 65 mesh, about 70 mesh, about 75 mesh, and about 80 mesh.

Once the desired shape and size are obtained, the granular adsorbent blend may calcined, preferably at about 600 °C, for about 1 to about 2 hours.

In any embodiment herein, the drying may include spray-drying to obtain the adsorbent material.

### Method of Treatment

Without being bound by theory, it is believed that the adsorbent material may demonstrate improvements in removing metal contaminants from liquids, and in particular, improved removal of metal contaminants from water during water treatment. Metal contaminants, as disclosed herein in any embodiment, may include, but are not limited to, lead (Pb), zinc (Zn), chromium (Cr), cadmium (Cd), copper (Cu), manganese (Mn), iron (Fe), and the like. Water treatment, as used herein, refers to a process for improving the quality of water by removing contaminants or other undesirable constituents for a particular end-use. Such end uses may include water treatment for industrial, recreational, environmental, household, or drinking purposes. The methods of treatment described herein in any embodiment may be performed as part of conventional water treatment methods or may be used alone for water treatment.

In yet another aspect, the present technology provides a method for treating a liquid comprising metal contaminants that includes contacting the liquid with an adsorbent material as described herein in any embodiment to obtain a treated liquid, wherein the contacting removes the metal contaminants from the liquid. In any embodiment disclosed herein, the liquid may be water. In any embodiment disclosed herein, the metal contaminant may include, but is not limited to, lead, zinc, chromium, cadmium, copper, manganese, iron, or a mixture of two or more thereof. For example, in any embodiment disclosed herein, the metal contaminant may be lead. In another embodiment disclosed herein, the metal contaminant may be cadmium.

In any embodiment disclosed herein, the method may be a water treatment method. For example, in any embodiment disclosed herein, the method may be a water treatment method that includes, but is not limited to, portable water purification, feedwater treatment, waste water treatment, water supply treatment, irrigation water treatment, water filtration, drinking water production, recreational water treatment, process water treatment, or a combination thereof. Additionally or alternatively, in some embodiments, the method may be combined with conventional water treatment methods for portable water purification, feedwater treatment, waste water treatment, water supply treatment, irrigation water treatment, water filtration, drinking water production, recreational water treatment, process water treatment, or combinations thereof.

In a further aspect, the present technology provides a method for treating water that includes contacting the water with an adsorbent material as described herein in any embodiment, wherein the contacting removes metal contaminants from the water. In any embodiment disclosed herein, the metal contaminant may include, but is not limited to, lead, zinc, chromium, cadmium, copper, manganese, iron, or a mixture of two or more thereof. For example, in any embodiment disclosed herein, the metal contaminant may be lead. In another embodiment disclosed herein, the metal contaminant may be cadmium.

In any embodiment disclosed herein, the method may be a water treatment method. For example, in any embodiment disclosed herein, the method may be a water treatment method that includes, but is not limited to, portable water purification, feedwater treatment, waste water treatment, water supply treatment, irrigation water treatment, water filtration, drinking water production, recreational water treatment, process water treatment, or a combination thereof. Additionally or alternatively, in some embodiments, the method may be combined with conventional water treatment methods for portable water purification, feedwater treatment, waste water treatment, water supply treatment, irrigation water treatment, water filtration, drinking water production, recreational water treatment, process water treatment, or combinations thereof.

In another aspect, the present technology provides a method for removing metal contaminants as described herein in any embodiment from water that includes contacting the water with an adsorbent material as described herein, wherein the contacting removes metal contaminants from the water. In any embodiment disclosed herein, the metal contaminant may include, but is not limited to, lead, zinc, chromium, cadmium, copper, manganese, iron, or a mixture of two or more thereof. For example, in any embodiment disclosed herein, the metal contaminant may be lead. In another embodiment disclosed herein, the metal contaminant may be cadmium.

In any embodiment disclosed herein, the method may be a water treatment method. For example, in any embodiment disclosed herein, the method may be a water treatment method that includes, but is not limited to, portable water purification, feedwater treatment, waste water treatment, water supply treatment, irrigation water treatment, water filtration, drinking water production, recreational water treatment, process water treatment, or a combination thereof. Additionally or alternatively, in some embodiments, the method may be combined with conventional water treatment methods for portable water purification, feedwater treatment, waste water treatment, water supply treatment, irrigation water treatment, water filtration, drinking water production, recreational water treatment, process water treatment, or combinations thereof.

The present invention, thus generally described, will be understood more readily by reference to the following examples, which are provided by way of illustration and are not intended to be limiting of the present invention.

### EXAMPLES

**Example 1:** Preparation of a Silicate Composition. A silicate composition was prepared according to the methods of producing described herein in any embodiment. Microsphere precursors containing a clay material were subjected to the *in situ* crystallization procedure to prepare the silicate composition according to conventional procedures. The resultant silicate composition was reduced to a particle size of 50 microns or less, filtered, and the solids were formed into a porous silicate cake. The porous silicate cake was pulverized and filtered through a 170 mesh screen. The particles corresponding to -170 mesh (1A) and +170 mesh (1B) were used to prepare a 10% solids slurry and spray dried to obtain a final adsorbent material. Samples were analyzed and properties of the prepared silicate composition are summarized in Table 1 below. HgPV provides the mercury pore volume in cc/g, TSA provides the total surface area in m²/g, and MSA provides the matrix surface area in m²/g.

| Porous Silicate Composition | |
|---|---|
| HgPV (20-10K Å), cc/g | 0.191 |
| Nitrogen PV (10-600 Å), cc/g | 0.055 |
| TSA, m²/g | 268 |
| MSA, m²/g | 37 |
| Unit Cell Size | 24.67 |
| Zeolite Y index | 35 |
| Average Particle Size, microns | 51.95 |
| Apparent Bulk Density | 0.51 |
| %Na₂O | 12.38 |
| %Al₂O₃ | 29.41 |
| %SiO₂ | 52.88 |
| %TiO₂ | 1.13 |
| %K₂O | 0.99 |
| % free moisture | 33.73 |

X-ray photoelectron spectroscopy analysis was conducted to determine the elemental composition of the silicate composition's surface as provided in the table below:

| Surface Composition Table (Atom Percent) | | |
|---|---|---|
| Element | ID¹ | S38/15 |
| Al | aluminosilicate | 5.8 |
| C | adventitious | 7.3 |
| C | C-O, C=O | 2.9 |
| K | 1+ | 0.4 |
| La | LaₓO_{y} | ND² |
| N | nitrate | ND |
| N | NO₂Si (nitrite) | ND |
| N | NOSi₂ | ND |
| Na | 1+ | 9.8 |
| O | Oxide | 52.9 |
| Si | Silicate | 20.9 |
| 1. ID = chemical state identifications are based on consistencies between reference and measured binding energies and are not absolute. | | |
| 2. ND = not detected. | | |

As shown in the table above, the silicate composition exhibits a sodium (Na) surface concentration of 9.8% calculated as atomic percent, while only a small amount of potassium (K) of 0.4% was observed on the silicate composition's surface.

**Example 2:** Preparation of adsorbent material blends. Adsorbent material blends containing a weight ratio of titanosilicate (ATS) to silicate composition of 80:20 (Ex. 2A) and 50:50 (Ex. 2B), respectively, were prepared according to the methods described herein. A porous silicate cake was formed according to Example 1, which was mixed in water at approximately 12% solids, and -170 mesh size fraction was obtained at 9-10% solids of the silicate composition. The resultant -170 mesh silicate slurry containing 9-10% solids was blended with an ATS slurry containing between 8.7-10% solids. The blend was spray dried to obtain microspheres of the final adsorbent material.

**Example 3:** Electron microscopy images and X-ray Powder Diffraction (XRD) scans of the adsorbent materials. The interconnected porous scaffold for adsorbent materials containing the silicate composition prepared in Example 1A (-170 mesh) only and the 50:50 and 80:20 (ATS : silicate composition) blends prepared in Example 2 was observed using scanning electron microscopy (SEM) and transmission electron microscopy (TEM). As shown in FIG. 1A, a cut/mount/polish (CMP) section SEM image view of the adsorbent material of Example 1 showed the crystallized Y-zeolite phase and interconnected porous scaffold is readily observed. FIGs. 1B and 1C showed a CMP section view of the 50:50 and 80:20 blends of Example 2, where the crystallized Y-zeolite and interconnected porous scaffold is maintained throughout the blended material. As shown in FIGs. 2A-2C, TEM images illustrate the pores observed in the adsorbent materials of Examples 1 and 2 contained the crystallized Y-zeolite throughout the porous network and the amorphous matrix phase.

XRD scans of the silicate composition according to Example 1A, 80:20 blend of ATS/silicate composition according to Example 2A, and ATS only were obtained. As shown in FIG. 3, the XRD scan of the silicate composition (Ex. 1A) crystalline phase via representative faujasite peaks. XRD scans of the 80:20 ATS/silicate composition blend (Ex. 2A) shows the presence of both an amorphous phase and crystalline phase (FIG. 3), and the XRD scan of ATS only shows the amorphous structure of the ATS material.

**Example 4:** Determination of the lead exchange capacity of ATS and silicate composition. The adsorbent materials according to Examples 1 and 2 were evaluated for lead exchange capacity. Comparative samples were treated with ATS only. A 0.20 g portion of the adsorbent materials according to Examples 1 and 2 and comparative ATS material were each stirred in 100 mL of a 1000 mg/L lead nitrate aqueous solution for a period of one hour with stirring. The solution containing the adsorbent materials or ATS were then filtered and analyzed for lead content via Inductive Coupling Plasma-Optical Emission Spectroscopy (ICP-OES) analysis. The table below summarizes the analysis.

| | **ATS** | **Example 1A (-170 mesh)** | **Example 2A (80:20 Blend)** | **Example 2B (50:50 Blend)** |
|---|---|---|---|---|
| Spray Dryer Feed Solids, % | 9.5 | 8.7 | 9.1 | 9.2 |
| pH | 8.7 | 11.8 | 9.8 | 11.1 |
| **% Pb Exchange** | **22.3** | **34.9** | **25.3** | **29.9** |
| Total Surface Area, m²/g | 245.5 | 304.2 | 257.2 | 284.3 |
| Particle Size Distribution* | | | | |
| d₉₀, µm | *68.1* | *68.1* | *47.2* | *45.4* |
| d₅₀, µm | *41.8* | *23.5* | *17.8* | *17.1* |
| d₁₀, µm | *20.6* | *8.7* | *10.3* | *8.3* |
| Spray Dried Product Moisture, % | 6.4 | 11.5 | 10.2 | 9.7 |

| | | | | |
|---|---|---|---|---|
| *Measured by Microtrac S3500 Particle Size Analyzer. | | | | |

As shown in the table above, the adsorbent materials containing silicate compositions 1A, 2A, and 2B, respectively, according to the present technology showed higher lead (Pb) exchange capacity than the comparative ATS adsorbent. In particular, Examples 1A, 2A, and 2B exhibited a %Pb exchange of 34.9%, 25.3%, and 29.9%, respectively. In contrast, ATS showed a %Pb exchange of 22.3%.

**Example 5:** Preparation of granulated adsorbent blend. 210 grams of the silicate product that was prepared in accordance to Example 1 with -80 mesh size was blended with 90 grams of a commercially available kaolin product (ASP^{®} 602). The kaolin was prepared as highly dispersed kaolin particles in high solids slurry form (60% solids), which was then blended with silicate product at 70% silicate/30% kaolin clay blend ratio (w/w dry basis). This blend was spray dried in a lab spray drier to provide the spray dried product.

A lab pin mixer with variable speed and pins attached to it with 1-L capacity was used for granulation.

300 grams of the spray dried product was added to container of the lab pin mixer, and the lab pin mixer was turned on. A previously prepared kaolin slurry at 60% solids was slowly added to the spray dried product as the blend was mixed. Once the sufficient amount of kaolin slurry was added, granules formed in the mixing chamber. The mixer speed was adjusted during the granulation step to control granule size. The amount of slurry was recorded to be 120 grams. After the granules were formed, the resulting granulated adsorbent blend was removed from container. Moisture content was measured using a CEM microwave moisture analyzer and the moisture content of the granulated adsorbent blend was 17.0%. The granulated adsorbent blend screened using different mesh size screens. The final granulated product was a blend of 50% silicate / 50% kaolin clay (w/w on a dry basis) and screening provided granulated products with the following mesh sizes: 6, 10, 20, 40, and 80.

**Example 6:** Determination of the cadmium exchange capacity of ATS and silicate adsorbent. Note: The adsorbent that was used for cadmium exchange capacity was 100% silicate material with -80 mesh particle size in spray dried form. Tests were repeated twice (Test A and B) for comparative sample of ATS and silicate adsorbent to determine cadmium exchange capacity. A 0.20 g portion of the adsorbent materials according to Example 1 and comparative ATS material were each stirred in 100 mL of a 1000 mg/L cadmium nitrate aqueous solution for a period of one hour with stirring. The solution containing the silicate adsorbent or ATS were then filtered and analyzed for cadmium content via Inductive Coupling Plasma-Optical Emission Spectroscopy (ICP-OES) analysis. The table below summarizes the analysis.

| | **ICP¹** | **Calculations²** | | **% Cadmium Exchange** |
|---|---|---|---|---|
| | | **Cadmium, ppm** | **Cadmium value** | |
| Stock Solution | 51.743 | 1034.86 | | |
| ATS Comp A | 42.040 | 840.80 | 194.06 | 9.67 |
| ATS Comp B | 42.213 | 844.26 | 190.60 | 9.53 |
| Silicate Adsorbent A | 33.592 | 671.84 | 363.02 | 18.12 |
| Silicate Adsorbent B | 33.875 | 677.50 | 357.36 | 17.83 |
| 40 ppm Calibration | | | | |
| Standard | 40.028 | | | |

| | | | | |
|---|---|---|---|---|
| ¹At 20 dilution, 5 mL into 100 mL, average of three Cadmium, ppm. ²Multiplied by dilution factor (20). | | | | |

As shown in the table above, the silicate adsorbent materials according to the present invention showed higher cadmium (Cd) exchange capacity than the comparative ATS adsorbents. In particular, silicate adsorbent exhibited a %Cd exchange of 17.83-18.12%with an average of 17.98% of two repeat tests.. In contrast, ATS Comp showed a %Cd exchange of 9.53-9.67% with an average of 9.60% of two repeat tests.

Accordingly, the adsorbent materials of the present technology exhibit a high porosity, high surface area, and a unique interconnected pore network (i.e., porous scaffold) and improved removal of lead and cadmium from water.

Para. 1. An adsorbent material comprising a silicate composition, wherein the silicate composition comprises about 5% to about 95% by weight of a crystalline phase;
wherein the silicate composition comprises an interconnected porous scaffold having a total mercury (Hg) pore volume of 0.005 cc/g to 0.25 cc/g for pores having a diameter of 20-10,000 Å, a total mercury (Hg) pore volume of 0.10 cc/g to 0.25 cc/g for pores having a diameter of 200-10,000 Å, and a total nitrogen (N) pore volume of 0.02 cc/g to 0.10 cc/g for pores having a diameter of 20-600 Å;
wherein the silicate composition comprises:
   20% to 60% by weight of the crystalline phase comprising Y-zeolite;
   5% to 95% by weight of a non-zeolitic matrix phase based on the total weight of the silicate composition; and
   wherein the silicate composition has a surface composition comprising 5% to 20% sodium calculated as atomic percent and a surface area of 200 m²/g to 500 m²/g; and
   wherein the composition further comprises additional adsorbent comprising titanosilicate.

Para. 2. The adsorbent material of Para. 1, wherein the crystalline phase comprises zeolite selected from zeolite X, Y-zeolite, ZSM-5, beta zeolite, ZSM-11, ZSM-14, ZSM-17, ZSM-18, ZSM-20, ZSM-31, ZSM-34, ZSM-41, ZSM-46, mordenite, chabazite, or mixtures of two or more thereof.

Para. 3. The adsorbent material of Para. 1or 2, wherein the silicate composition comprises about 20% to about 60% by weight of the crystalline phase.

Para. 4. The adsorbent material of any one of Paras. 1-5, wherein the interconnected porous scaffold comprises pores that are microporous, mesoporous, macroporous, or a mixture thereof.

Para. 5. The adsorbent material of Para. 4, wherein the surface composition comprises about 7% to about 12% sodium calculated as atomic percent.

Para. 6. The adsorbent material of Para. 5, wherein the surface composition comprises about 9% to about 11% sodium calculated as atomic percent.

Para. 7. The adsorbent material of any one of Paras. 1-6, wherein the silicate composition has a particle size of about 40 microns to about 150 microns.

Para. 8. The adsorbent material of any one of Paras. 1-7, wherein the silicate composition has an average particle size distribution of about 10 microns to about 60 microns.

Para. 9. The adsorbent material of Para. 8, wherein the average particle size distribution is about 45 microns to about 55 microns.

Para. 10. The adsorbent material of Para. 8 or 9, wherein the average particle size distribution is measured by Microtrac S3500 Particle Size Analyzer.

Para. 11. The adsorbent material of any one of Paras. 1-10, wherein the crystalline phase comprising Y-zeolite is a zeolite crystallization process residue of clay.

Para. 12. The adsorbent material of Para. 11, wherein the clay is calcined clay.

Para. 13. The adsorbent material of Para. 11 or 12, wherein the clay comprises metakaolin, kaolin clay, or a mixture of any two or more thereof.

Para. 14. The adsorbent material of any one of Paras. 12-13, wherein the clay comprises about 30% to about 60% by weight of metakaolin and about 40% to about 70% by weight of kaolin clay that has been substantially through its characteristic exotherm.

Para. 15. The adsorbent material of any one of Paras.1-14 further comprising additional adsorbents.

Para. 16. The adsorbent material of Para. 15, wherein the additional adsorbents comprise non-zeolitic molecular sieves, activated carbon, porous glass, clays, metalloaluminates, metallophosphates, layered silicate, or combinations of two or more thereof.

Para. 17. The adsorbent material of Para. 15 or 16, wherein the adsorbent material comprises a weight ratio of the silicate composition to the additional adsorbent of about 99:1 to about 1:99.

Para. 18. The adsorbent material of Para. 17, wherein the weight ratio of the silicate composition to the additional adsorbent of about 50:50 to about 20:80.

Para. 19. The adsorbent material of any one of Paras. 1-14 further comprising a binder.

Para. 20. The adsorbent material of Para. 19, wherein the binder comprises alumina, silicate, and clay minerals, or combinations of two or more.

Para. 21. The adsorbent material of Para. 19, wherein the binder comprises kaolin clay.

Para. 22. The adsorbent material of any one of Paras. 19-21 further comprising a pore forming agent.

Para. 23. The adsorbent material of Para. 22, wherein the pore forming agent comprises an organic polymer, corn starch, a starch derivative, a lignosulfonate, a polyacrylamide, polyacrylic acid, poly vinyl alcohol, cellulose, a cellulose derivative, or combinations of two or more.

Para. 24. The adsorbent material of any one of Para. 19-23, wherein binder has a weight ratio of the silicate composition to the binder of from about 90:10 to about 50:50.

Para. 25. The adsorbent material of Para. 24, wherein binder has a weight ratio of the silicate composition to the binder of from about 80:20 to about 60:40.

Para. 26. The adsorbent material of any one of Paras. 19-25, wherein the adsorbent material is granular adsorbent material.

Para. 27. The adsorbent material of Para. 26, wherein the granular adsorbent material has a mesh size of from about 10 mesh to about 80 mesh.

Para. 28. The adsorbent material of any one of Paras. 1-27, wherein the adsorbent material has a percent increase in lead exchange capacity in water of about 15% to about 150% compared to titanosilicate-based adsorbent materials.

Para. 29. The adsorbent material of any one of Paras. 1-27, wherein the adsorbent material has a percent increase in cadmium exchange capacity in water of about 50% to about 500% compared to titanosilicate-based adsorbent materials.

Para. 30. A method for removing metal contaminants from water comprising:
contacting the water with an adsorbent material comprising a silicate composition;
wherein:
   contacting the water removes the metal contaminants from the water; and
   the silicate composition comprises:
      about 5% to about 95% by weight of a crystalline phase;
      wherein the silicate composition comprises an interconnected porous scaffold having a total mercury (Hg) pore volume of 0.005 cc/g to 0.25 cc/g for pores having a diameter of 20-10,000 Å, a total mercury (Hg) pore volume of 0.10 cc/g to 0.25 cc/g for pores having a diameter of 200-10,000 Å and a total nitrogen (N) pore volume of 0.02 cc/g to 0.10 cc/g for pores having a diameter of 20-600 Å;
      wherein the silicate composition comprises:
         20% to 60% by weight of the crystalline phase comprising Y-zeolite;
         5% to 95% by weight of a non-zeolitic matrix phase based on the total weight of the silicate composition; and
         wherein the silicate composition has a surface composition comprising 5% to 20% sodium calculated as atomic percent and a surface area of 200 m²/g to 500 m²/g; and
         wherein the adsorbent material further comprises additional adsorbent comprising titanosilicate.

Para. 31. The method of any one of Para. 30, wherein the silicate composition comprises about 20% to about 60% by weight of the crystalline phase.

Para. 32. The method of any one of Para. 30 or 31, wherein the interconnected porous scaffold comprising pores that are microporous, mesoporous, macroporous, or a mixture thereof.

Para. 33. The method of any one of Paras. 30-32, wherein the silicate composition has an average particle size of about 40 microns to about 150 microns.

Para. 34. The method of any one of Paras. 30-33, wherein the silicate composition has an average particle size distribution of about 10 microns to about 60 microns.

Para. 35. The method of any one of Paras. 30-34 further comprising additional adsorbents.

Para. 36. The method of Para. 35, wherein the additional adsorbents comprise non-zeolitic molecular sieves, activated carbon, porous glass, clays, metalloaluminates, metallophosphates, or combinations of two or more thereof.

Para. 37. The method of Para. 36, wherein the adsorbent material comprises a weight ratio of the silicate composition to the additional adsorbent of about 99:1 to about 1:99.

Para. 38. The method of Para. 37, wherein the weight ratio of the silicate composition to the additional adsorbent of about 50:50 to about 20:80.

Para. 39. The method of any one of Paras. 30-34, wherein the adsorbent material further comprises a binder.

Para. 40. The method of Para. 39, wherein the binder comprises alumina, silicate, and clay minerals, or combinations of two or more.

Para. 41. The method of Para. 39, wherein the binder comprises kaolin clay.

Para. 42. The method of any one of Paras. 39-41, wherein the adsorbent material further comprises a pore forming agent.

Para. 43. The method of Para. 42, wherein the pore forming agent comprises an organic polymer, corn starch, a starch derivative, a lignosulfonate, a polyacrylamide, polyacrylic acid, poly vinyl alcohol, cellulose, a cellulose derivative, or combinations of two or more.

Para. 44. The method of any one of Paras. 39-43, wherein binder has a weight ratio of the silicate composition to the binder from about 90:10 to about 50:50.

Para. 45. The method of Para. 44, wherein binder has a weight ratio of the silicate composition to the binder from about 80:20 to about 60:40.

Para. 46. The method of any one of Paras. 39-45, wherein the adsorbent material is granular adsorbent material.

Para 47. The method of Para. 46, wherein the granular adsorbent material has a mesh size of from about 10 mesh to about 80 mesh.

Para. 48. The method of any one of Paras. 30-47, wherein the method is a water treatment method selected from portable water purification, feedwater treatment, waste water treatment, water supply treatment, irrigation water treatment, water filtration, drinking water production, recreational water treatment, process water treatment, or combinations thereof.

Para. 49. The method of any one of Paras. 30-49, wherein the method is combined with conventional water treatment methods comprising portable water purification, feedwater treatment, waste water treatment, water supply treatment, irrigation water treatment, water filtration, drinking water production, recreational water treatment, process water treatment, or combinations thereof.

While certain embodiments have been illustrated and described, it should be understood that changes and modifications can be made therein in accordance with ordinary skill in the art without departing from the technology in its broader aspects as defined in the following claims.

The embodiments, illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and it is recognized that various modifications are possible within the scope of the claimed technology. Additionally, the phrase "consisting essentially of" will be understood to include those elements specifically recited and those additional elements that do not materially affect the basic and novel characteristics of the claimed technology. The phrase "consisting of" excludes any element not specified.

The present disclosure is not to be limited in terms of the particular embodiments described in this application. The present disclosure is to be limited only by the terms of the appended claims. It is to be understood that this disclosure is not limited to particular methods, reagents, compounds, or compositions, which can of course vary. It is also to be understood that the terminology used herein is for the purpose of describing particular embodiments only, and is not intended to be limiting.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like, include the number recited and refer to ranges which can be subsequently broken down into subranges as discussed above. Finally, as will be understood by one skilled in the art, a range includes each individual member.

Other embodiments are set forth in the following claims.

## Claims

1. An adsorbent material comprising a silicate composition, wherein the silicate composition comprises 5% to 95% by weight of a crystalline phase;
wherein the silicate composition comprises an interconnected porous scaffold having a total mercury (Hg) pore volume of 0.005 cc/g to 0.25 cc/g for pores having a diameter of 20-10,000 Å, a total mercury (Hg) pore volume of 0.10 cc/g to 0.25 cc/g for pores having a diameter of 200-10,000 Å, and a total nitrogen (N) pore volume of 0.02 cc/g to 0.10 cc/g for pores having a diameter of 20-600 Å;
wherein the silicate composition comprises:
20% to 60% by weight of the crystalline phase comprising Y-zeolite;
5% to 95% by weight of a non-zeolitic matrix phase based on the total weight of the silicate composition; and
wherein the silicate composition has a surface composition comprising 5% to 20% sodium calculated as atomic percent and a surface area of 200 m²/g to 500 m²/g; and
wherein the composition further comprises additional adsorbent comprising titanosilicate.

2. The adsorbent material of claim 1, wherein the crystalline phase comprises a zeolite comprising zeolite X, Y-zeolite, ZSM-5, beta zeolite, ZSM-11, ZSM-14, ZSM-17, ZSM-18, ZSM-20, ZSM-31, ZSM-34, ZSM-41, ZSM-46, mordenite, chabazite, or mixtures of two or more thereof.

3. The adsorbent material of claim 1 or 2, wherein the silicate composition comprises 20% to 60% by weight of the crystalline phase.

4. The adsorbent material of any one of claims 1-3, wherein the interconnected porous scaffold comprises pores that are microporous, mesoporous, macroporous, or a mixture thereof.

5. The adsorbent material of any one of claims 1-4, wherein the silicate composition has a particle size of 40 microns to 150 microns.

6. The adsorbent material of any one of claims 1-5, wherein the crystalline phase comprising Y-zeolite is a zeolite crystallization process residue of clay.

7. The adsorbent material of claim 6, wherein the clay comprises metakaolin, kaolin clay, or a mixture of any two or more thereof.

8. The adsorbent material of claim 6 or 7, wherein the clay comprises 30% to 60% by weight of metakaolin and 40% to 70% by weight of kaolin clay that has been substantially through its characteristic exotherm.

9. The adsorbent material of any one of claims 1-8, further comprising additional adsorbents comprising non-zeolitic molecular sieves, activated carbon, porous glass, clays, metalloaluminates, metallophosphates, layered silicate, or combinations of two or more thereof.

10. The adsorbent material of claim 1, wherein the adsorbent material comprises a weight ratio of the silicate composition to the additional adsorbent of 99:1 to 1:99.

11. The adsorbent material of any one of claims 1-8 further comprising a binder comprising alumina, silicate, and clay minerals, or combinations of two or more.

12. The adsorbent material of claim 11, wherein the binder comprises kaolin clay.

13. The adsorbent material of claim 11 or 12, further comprising a pore forming agent comprising an organic polymer, corn starch, a starch derivative, a lignosulfonate, a polyacrylamide, polyacrylic acid, poly vinyl alcohol, cellulose, a cellulose derivative, or combinations of two or more.

14. The adsorbent material of any one of claims 11-13, wherein binder has a weight ratio of the silicate composition to the binder of from 90:10 to 50:50.

15. The adsorbent material of any one of claims 11-14, wherein the adsorbent material is granular adsorbent material.

16. The adsorbent material of claim 15, wherein the granular adsorbent material has a mesh size of from (10 mesh) 2000 micron to (80 mesh) 177 micron.

17. A method for treating a liquid comprising metal contaminants, the method comprising:
contacting the liquid with the adsorbent material of any one of claims 1-16 to obtain a treated liquid;
wherein the treated liquid comprises a lower concentration of metal contaminants compared to the liquid.

18. A method for removing metal contaminants from water comprising:
contacting the water with an adsorbent material comprising a silicate composition;
wherein:
contacting the water removes the metal contaminants from the water; and
the silicate composition comprises:
5% to 95% by weight of a crystalline phase;
wherein the silicate composition comprises an interconnected porous scaffold having a total mercury (Hg) pore volume of 0.005 cc/g to 0.25 cc/g for pores having a diameter of 20-10,000 Å, a total mercury (Hg) pore volume of 0.10 cc/g to 0.25 cc/g for pores having a diameter of 200-10,000 Å and a total nitrogen (N) pore volume of 0.02 cc/g to 0.10 cc/g for pores having a diameter of 20-600 Å;
wherein the silicate composition comprises:
20% to 60% by weight of the crystalline phase comprising Y-zeolite;
5% to 95% by weight of a non-zeolitic matrix phase based on the total weight of the silicate composition; and
wherein the silicate composition has a surface composition comprising 5% to 20% sodium calculated as atomic percent and a surface area of 200 m²/g to 500 m²/g; and
wherein the adsorbent material further comprises additional adsorbent comprising titanosilicate.

19. The method of claim 18, wherein the adsorbent material further comprises a binder comprising alumina, silicate, and clay minerals, or combinations of two or more.

20. The method of claim 19, wherein the binder comprises kaolin clay.

21. The method of any one of claims 18-20, wherein the metal contaminants comprise lead, zinc, chromium, cadmium, copper, manganese, iron, or a mixtures of any two or more thereof.

22. The method of any one of claims 18-21, wherein the method is a water treatment method selected from portable water purification, feedwater treatment, waste-water treatment, water supply treatment, irrigation water treatment, water filtration, drinking water production, recreational water treatment, process water treatment, or combinations thereof.

23. The method of any one of claims 18-22, wherein the method is combined with conventional water treatment methods comprising portable water purification, feedwater treatment, waste water treatment, water supply treatment, irrigation water treatment, water filtration, drinking water production, recreational water treatment, process water treatment, or combinations thereof.

## Patentansprüche

1. Adsorptionsmaterial, umfassend eine Silikatzusammensetzung, wobei die Silikatzusammensetzung zu 5 bis 95 Gew.-% eine kristalline Phase umfasst;
wobei die Silikatzusammensetzung ein miteinander verbundenes poröses Gerüst umfasst, das eine Gesamtporenvolumen von Quecksilber (Hg) von 0,005 cm³/g bis 0,25 cm³/g für Poren, die einen Durchmesser von 20-10.000 Å aufweisen, ein Gesamtporenvolumen von Quecksilber (Hg) von 0,10 cm³/g bis 0,25 cm³/g für Poren, die einen Durchmesser von 200-10.000 Å aufweisen, und ein Gesamtporenvolumen von Stickstoff (N) von 0,02 cm³/g bis 0,10 cm³/g für Poren aufweist, die einen Durchmesser von 20-600 Å aufweisen;
wobei die Silikatzusammensetzung umfasst:
zu 20 bis 60 Gew.-% die kristalline Phase, umfassend Y-Zeolith;
zu 5 bis 95 Gew.-% eine nicht-zeolithische Matrixphase, basierend auf dem Gesamtgewicht der Silikatzusammensetzung; und
wobei die Silikatzusammensetzung eine Oberflächenzusammensetzung aufweist, umfassend zu 5 % bis 20 % Natrium, berechnet als Atomprozent, und eine Oberfläche von 200 m²/g bis 500 m²/g; und
wobei die Zusammensetzung ferner ein zusätzliches Adsorptionsmittel umfasst, umfassend Titansilikat.

2. Adsorptionsmaterial nach Anspruch 1, wobei die kristalline Phase ein Zeolith umfasst, umfassend Zeolith X, Y-Zeolith, ZSM-5, Beta-Zeolith, ZSM-11, ZSM-14, ZSM-17, ZSM-18, ZSM-20, ZSM-31, ZSM-34, ZSM-41, ZSM-46, Mordenit, Chabazit oder Mischungen von zwei oder mehreren davon.

3. Adsorptionsmaterial nach Anspruch 1 oder 2, wobei die Silikatzusammensetzung zu 20 bis 60 Gew.-% die kristalline Phase umfasst.

4. Adsorptionsmaterial nach einem der Ansprüche 1 bis 3, wobei das miteinander verbundene poröse Gerüst Poren umfasst, die mikroporös, mesoporös, makroporös oder eine Mischung davon sind.

5. Adsorptionsmaterial nach einem der Ansprüche 1 bis 4, wobei die Silikatzusammensetzung eine Partikelgröße von 40 Mikrometer bis 150 Mikrometer aufweist.

6. Adsorptionsmaterial nach einem der Ansprüche 1 bis 5, wobei die kristalline Phase, umfassend Y-Zeolith, ein Zeolithkristallisationsprozessrückstand von Ton ist.

7. Adsorptionsmaterial nach Anspruch 6, wobei der Ton Metakaolin, Kaolinton oder eine Mischung aus beliebigen zwei oder mehreren davon umfasst.

8. Adsorptionsmaterial nach Anspruch 6 oder 7, wobei der Ton zu 30 bis 60 Gew.-% Metakaolin und zu 40 bis 70 Gew.-% Kaolinton umfasst, der seine charakteristische Exothermie im Wesentlichen durchlaufen hat.

9. Adsorptionsmaterial nach einem der Ansprüche 1 bis 8, ferner umfassend zusätzliche Adsorptionsmittel, umfassend nicht-zeolithische Molekularsiebe, Aktivkohle, poröses Glas, Tone, Metalloaluminate, Metallophosphate, Schichtsilikat oder Kombinationen aus zwei oder mehreren davon.

10. Adsorptionsmaterial nach Anspruch 1, wobei das Adsorptionsmaterial ein Gewichtsverhältnis der Silikatzusammensetzung zu dem zusätzlichen Adsorptionsmittel von 99 : 1 bis 1 : 99 umfasst.

11. Adsorptionsmaterial nach einem der Ansprüche 1 bis 8, ferner umfassend ein Bindemittel, umfassend Aluminium, Silikat und Tonmineralien oder Kombinationen aus zwei oder mehreren.

12. Adsorptionsmaterial nach Anspruch 11, wobei das Bindemittel Kaolinton umfasst.

13. Adsorptionsmaterial nach Anspruch 11 oder 12, ferner umfassend ein porenausbildendes Mittel, umfassend ein organisches Polymer, Maisstärke, ein Stärkederivat, ein Lignosulfonat, ein Polyacrylamid, Polyacrylsäure, Polyvinylalkohol, Zellulose, ein Zellulosederivat oder Kombinationen aus zwei oder mehreren.

14. Adsorptionsmaterial nach einem der Ansprüche 11 bis 13, wobei das Gewichtsverhältnis der Silikatzusammensetzung zu dem Bindemittel von 90 : 10 bis 50 : 50 beträgt.

15. Adsorptionsmaterial nach einem der Ansprüche 11 bis 14, wobei das Adsorptionsmaterial ein körniges Adsorptionsmaterial ist.

16. Adsorptionsmaterial nach Anspruch 15, wobei das körnige Adsorptionsmaterial eine Maschenweite von (10 Mesh) 2000 Mikrometer bis (80 Mesh) 177 Mikrometer aufweist.

17. Verfahren zum Behandeln einer Flüssigkeit, umfassend Metallverunreinigungen, das Verfahren umfassend:
Inberührungbringen der Flüssigkeit mit dem Adsorptionsmaterial nach einem der Ansprüche 1 bis 16, um eine behandelte Flüssigkeit zu erhalten;
wobei die behandelte Flüssigkeit im Vergleich zu der Flüssigkeit eine geringere Konzentration von Metallverunreinigungen umfasst.

18. Verfahren zum Entfernen metallischer Verunreinigungen aus Wasser, umfassend: Inberührungbringen des Wassers mit einem Adsorptionsmaterial, umfassend eine Silikatzusammensetzung; wobei:
das Inberührungbringen mit dem Wasser die Metallverunreinigungen aus dem Wasser entfernt; und
die Silikatzusammensetzung umfasst:
zu 5 bis 95 Gew.-% eine kristalline Phase;
wobei die Silikatzusammensetzung ein miteinander verbundenes poröses Gerüst umfasst, das eine Gesamtporenvolumen von Quecksilber (Hg) von 0,005 cm³/g bis 0,25 cm³/g für Poren, die einen Durchmesser von 20-10.000 Å aufweisen, ein Gesamtporenvolumen von Quecksilber (Hg) von 0,10 cm³/g bis 0,25 cm³/g für Poren, die einen Durchmesser von 200-10.000 Å aufweisen, und ein Gesamtporenvolumen von Stickstoff (N) von 0,02 cm³/g bis 0,10 cm³/g für Poren aufweist, die einen Durchmesser von 20-600 Å aufweisen;
wobei die Silikatzusammensetzung umfasst:
zu 20 bis 60 Gew.-% die kristalline Phase, umfassend Y-Zeolith;
zu 5 bis 95 Gew.-% eine nicht-zeolithische Matrixphase, basierend auf dem Gesamtgewicht der Silikatzusammensetzung; und
wobei die Silikatzusammensetzung eine Oberflächenzusammensetzung aufweist, umfassend zu 5 % bis 20 % Natrium, berechnet als Atomprozent, und eine Oberfläche von 200 m²/g bis 500 m²/g; und
wobei das Adsorptionsmaterial ferner ein zusätzliches Adsorptionsmittel umfasst, umfassend Titanosilikat.

19. Verfahren nach Anspruch 18, wobei das Adsorptionsmaterial ferner ein Bindemittel umfasst, umfassend Aluminium, Silikat und Tonmineralien oder Kombinationen aus zwei oder mehreren.

20. Verfahren nach Anspruch 19, wobei das Bindemittel Kaolinton umfasst.

21. Verfahren nach einem der Ansprüche 18 bis 20, wobei die Metallverunreinigungen Blei, Zink, Chrom, Cadmium, Kupfer, Mangan, Eisen oder eine Mischung aus beliebigen zwei oder mehreren davon umfassen.

22. Verfahren nach einem der Ansprüche 18 bis 21, wobei das Verfahren ein Wasseraufbereitungsverfahren ist, das aus der tragbaren Wasserreinigung, Speisewasseraufbereitung, Abwasseraufbereitung, Wasserversorgungsaufbereitung, Bewässerungswasseraufbereitung, Wasserfiltration, Trinkwassergewinnung, Freizeitwasseraufbereitung, Prozesswasseraufbereitung oder Kombinationen davon ausgewählt ist.

23. Verfahren nach einem der Ansprüche 18 bis 22, wobei das Verfahren mit herkömmlichen Wasseraufbereitungsverfahren kombiniert wird, umfassend tragbare Wasserreinigung, Speisewasseraufbereitung, Abwasseraufbereitung, Wasserversorgungsaufbereitung, Bewässerungswasseraufbereitung, Wasserfiltration, Trinkwassergewinnung, Freizeitwasseraufbereitung, Prozesswasseraufbereitung oder Kombinationen davon.

## Revendications

1. Matériau adsorbant comprenant une composition de silicate, dans lequel la composition de silicate comprend de 5 % à 95 % en poids d'une phase cristalline ;
dans lequel la composition de silicate comprend un échafaudage poreux interconnecté ayant une porosité totale de mercure (Hg) de 0,005 cc/g à 0,25 cc/g pour les pores ayant un diamètre de 20 à 10 000 Å, une porosité totale de mercure (Hg) de 0,10 cc/g à 0,25 cc/g pour les pores ayant un diamètre de 200 à 10 000 Å, et une porosité totale d'azote (N) de 0,02 cc/g à 0,10 cc/g pour les pores ayant un diamètre de 20 à 600 Å ;
dans lequel la composition de silicate comprend :
20 % à 60 % en poids de la phase cristalline comprenant la zéolite Y ;
5 % à 95 % en poids d'une phase matricielle non zéolithique par rapport au poids total de la composition de silicate ; et
dans lequel la composition de silicate a une composition de surface comprenant 5 % à 20 % de sodium calculé en pourcentage atomique et une surface de 200 m²/g à 500 m²/g ; et
dans lequel la composition comprend en outre un adsorbant supplémentaire comprenant du titanosilicate.

2. Matériau adsorbant selon la revendication 1, dans lequel la phase cristalline comprend une zéolite comprenant la zéolite X, la zéolite Y, la ZSM-5, la zéolite bêta, la ZSM-11, la ZSM-14, la ZSM-17, la ZSM-18, la ZSM-20, la ZSM-31, la ZSM-34, la ZSM-41, la ZSM-46, la mordenite, la chabazite, ou des mélanges de deux ou plusieurs de celles-ci.

3. Matériau adsorbant selon la revendication 1 ou 2, dans lequel la composition de silicate comprend de 20 % à 60 % en poids de la phase cristalline.

4. Matériau adsorbant selon l'une quelconque des revendications 1 à 3, dans lequel l'échafaudage poreux interconnecté comprend des pores qui sont microporeux, mésoporeux, macroporeux ou un mélange de ceux-ci.

5. Matériau adsorbant selon l'une quelconque des revendications 1 à 4, dans lequel la composition de silicate a une taille de particule de 40 microns à 150 microns.

6. Matériau adsorbant selon l'une quelconque des revendications 1 à 5, dans lequel la phase cristalline comprenant la zéolite Y est un résidu d'argile issu du processus de cristallisation de la zéolite.

7. Matériau adsorbant selon la revendication 6, dans lequel l'argile comprend du métakaolin, de l'argile kaolinique, ou un mélange de quelconques deux ou plusieurs de ceux-ci.

8. Matériau adsorbant selon la revendication 6 ou 7, dans lequel l'argile comprend 30 % à 60 % en poids de métakaolin et 40 % à 70 % en poids d'argile kaolinique qui a sensiblement traversé son exotherme caractéristique.

9. Matériau adsorbant selon l'une quelconque des revendications 1 à 8, comprenant en outre des adsorbants supplémentaires comprenant des tamis moléculaires non zéolitiques, du charbon actif, du verre poreux, des argiles, des métalloaluminates, des métallophosphates, des silicates stratifiés, ou des combinaisons de deux ou plusieurs de ceux-ci .

10. Matériau adsorbant selon la revendication 1, dans lequel le matériau adsorbant comprend un rapport de poids entre la composition de silicate et l'adsorbant supplémentaire de 99:1 à 1:99.

11. Matériau adsorbant selon l'une quelconque des revendications 1 à 8, comprenant en outre un liant comprenant de l'alumine, du silicate et des minéraux argileux, ou des combinaisons de deux ou plusieurs de ceux-ci.

12. Matériau adsorbant selon la revendication 11, dans lequel le liant comprend de l'argile kaolinique.

13. Matériau adsorbant selon la revendication 11 ou 12 comprenant en outre un agent de formation des pores comprenant un polymère organique, de l'amidon de maïs, un dérivé de l'amidon, un ligno-sulfonate, un polyacrylamide, de l'acide polyacrylique, de l'alcool polyvinylique, de la cellulose, un dérivé de la cellulose, ou des combinaisons de deux ou plusieurs de ceux-ci.

14. Matériau adsorbant selon l'une quelconque des revendications 11 à 13, dans lequel le liant présente un rapport de poids entre la composition de silicate et le liant de 90:10 à 50:50.

15. Matériau adsorbant selon l'une quelconque des revendications 11 à 14, dans lequel le matériau adsorbant est un matériau adsorbant granulaire.

16. Matériau adsorbant selon la revendication 15, dans lequel le matériau adsorbant granulaire a une taille de maillage de (10 mesh) 2000 microns à (80 mesh) 177 microns.

17. Procédé de traitement d'un liquide comprenant des contaminants métalliques, le procédé comprenant :
la mise en contact du liquide avec le matériau adsorbant selon l'une quelconque des revendications 1 à 16 pour obtenir un liquide traité ;
dans lequel le liquide traité comprend une concentration plus faible de contaminants métalliques par comparaison avec le liquide.

18. Procédé d'élimination des contaminants métalliques de l'eau comprenant :
la mise en contact de l'eau avec un matériau adsorbant comprenant une composition de silicate ; dans lequel :
la mise en contact avec l'eau permet d'éliminer les contaminants métalliques de l'eau ; et la composition de silicate comprend :
5 % à 95 % en poids d'une phase cristalline ;
dans lequel la composition de silicate comprend un échafaudage poreux interconnecté ayant une porosité totale de mercure (Hg) de 0,005 cc/g à 0,25 cc/g pour les pores ayant un diamètre de 20 à 10 000 Å, une porosité totale de mercure (Hg) de 0,10 cc/g à 0,25 cc/g pour les pores ayant un diamètre de 200 à 10 000 Å et une porosité totale d'azote (N) de 0,02 cc/g à 0,10 cc/g pour les pores ayant un diamètre de 20 à 600 Å ;
dans lequel la composition de silicate comprend :
20 % à 60 % en poids de la phase cristalline comprenant la zéolite Y ;
5 % à 95 % en poids d'une phase matricielle non zéolithique par rapport au poids total de la composition de silicate ; et
dans lequel la composition de silicate a une composition de surface comprenant 5 % à 20 % de sodium calculé en pourcentage atomique et une surface de 200 m²/g à 500 m²/g ; et
dans lequel le matériau adsorbant comprend en outre un adsorbant supplémentaire comprenant du titanosilicate.

19. Procédé selon la revendication 18, dans lequel le matériau adsorbant comprend en outre un liant comprenant de l'alumine, du silicate et des minéraux argileux, ou des combinaisons de deux ou plusieurs de ceux-ci.

20. Procédé selon la revendication 19, dans lequel le liant comprend de l'argile kaolinique.

21. Procédé selon l'une quelconque des revendications 18 à 20, dans lequel les contaminants métalliques comprennent le plomb, le zinc, le chrome, le cadmium, le cuivre, le manganèse, le fer, ou un mélange de deux ou plusieurs quelconques de ceux-ci.

22. Procédé selon l'une quelconque des revendications 18 à 21, dans lequel le procédé est un procédé de traitement de l'eau choisi parmi la purification de l'eau portable, le traitement des eaux d'alimentation, le traitement des eaux usées, le traitement de l'approvisionnement en eau, le traitement de l'eau d'irrigation, la filtration de l'eau, la production d'eau potable, le traitement des eaux de loisirs, le traitement des eaux de processus, ou des combinaisons de ceux-ci.

23. Procédé selon l'une quelconque des revendications 18 à 22, dans lequel le procédé est combiné avec des procédés classiques de traitement de l'eau comprenant la purification de l'eau portable, le traitement des eaux d'alimentation, le traitement des eaux usées, le traitement de l'approvisionnement en eau, le traitement de l'eau d'irrigation, la filtration de l'eau, la production d'eau potable, le traitement des eaux de loisirs, le traitement des eaux de processus ou des combinaisons de ceux-ci.
